(19) Europäisches Patentamt
European Patent Office
Office européen des brevets

(11) Publication number: **0 264 705**
**A2**

(12) # EUROPEAN PATENT APPLICATION

(21) Application number: **87114557.9**

(22) Date of filing: **06.10.87**

(51) Int. Cl.[4] **C08L 63/00**, C08G 59/22, C08G 59/38, C08L 71/00

(30) Priority: **10.10.86 US 917635**
**31.08.87 US 91230**

(43) Date of publication of application:
**27.04.88 Bulletin 88/17**

(84) Designated Contracting States:
**AT BE CH DE ES FR GB GR IT LI LU NL SE**

(71) Applicant: **THE DOW CHEMICAL COMPANY**
**2030 Dow Center Abbott Road P.O. Box 1967**
**Midland, MI 48640(US)**

(72) Inventor: **Bertram, James L.**
**115 Southern Oaks Drive**
**Lake Jackson Texas 77566(US)**
Inventor: **Walker, Louis L.**
**246 Barbara Drive**
**Clute Texas 77531(US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2(DE)**

(54) **Blends of relatively low molecular weight epoxy resins and relatively high molecular weight epoxy or phenoxy resins and cured products therefrom.**

(57) A cured product consisting of a continuous phase and a dispersed phase as evidenced by at least two distinct glass transition temperatures results from curing a mixture of (A) a homogeneous blend comprising (1) a relatively low molecular weight epoxy resin and (2) a relatively high molecular weight halogenated epoxy or halogenated phenoxy resin and (B) a curing agent for component (A).. The cured product has improved toughness.

EP 0 264 705 A2

**BLENDS OF RELATIVELY LOW MOLECULAR WEIGHT EPOXY RESINS AND RELATIVELY HIGH MOLECULAR WEIGHT EXPOXY OR PHENOXY RESINS AND CURED PRODUCTS THEREFROM**

The present invention concerns homogeneous mixtures containing a relatively low molecular weight epoxy resin and a relatively high molecular weight epoxy or phenoxy resin and cured products thereof.

Tsen in U.S. 3,888,942 disclosed blends of epoxy resins and relatively high molecular weight epoxy or phenoxy resins. However, as far as the applicants can determine, these blends when cured resulted in a homogeneous product as evidenced by a single glass transition temperature. When a mixture of epoxy resins are cured and the resultant cured product has a single glass transition temperature, the cured product is homogeneous and the glass transition temperature is somewhere between the glass transition tempertature of the separately cured epoxy resins with the same curing agent. It has been discovered that when cured blends or relatively low molecular weight epoxy resins and relatively high molecular weight epoxy or phenoxy resins have two distinct glass transition temperatures the cured products not only exhibit the expected improved toughness, but they exhibit two separate and distinct glass transition temperatures, each of which is close to the glass temperature of the resins when cured separately with the same curing agent. This permits the cured product to be employed at a temperature much higher than that of the cured mixture which has only one separate and distinct glass transition temperature. The present invention therefore provides blends of epoxy resins and relatively high molecular weight epoxy or phenoxy resins which when cured have two separate and distinct glass transition temperatures.

The present invention pertains to homogeneous mixtures comprising

(1) from 50 to 90, preferably from 60 to 80, most preferably from 65 to 75 by percent weight based upon the combined weight of components (1) and (2) of at least one relatively low molecular weight epoxy resin represented by the following formulas

FORMULA I

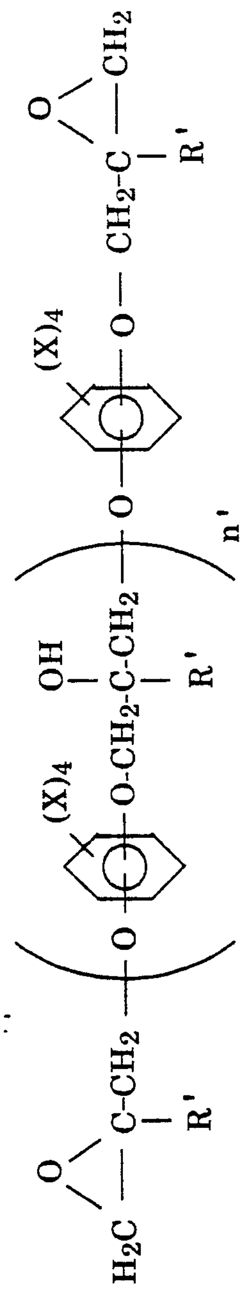

FORMULA II

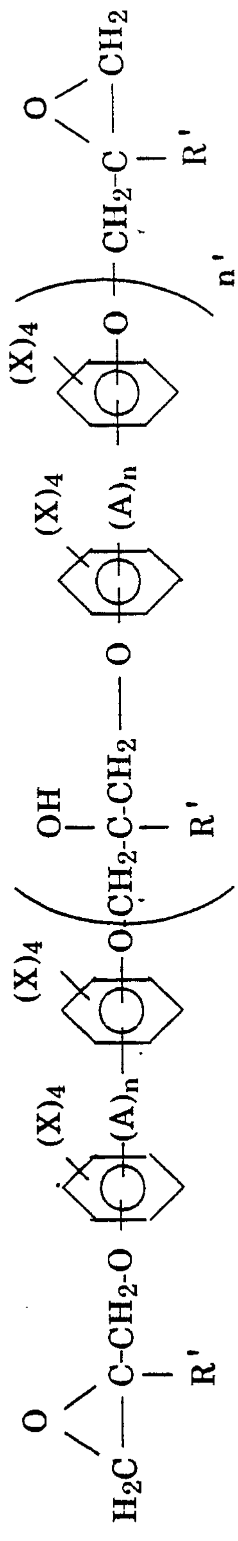

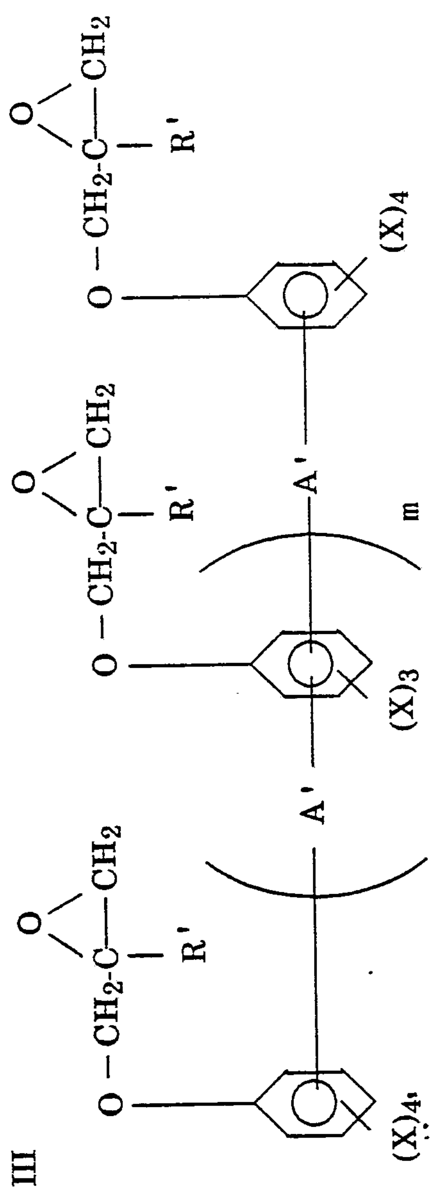

FORMULA III

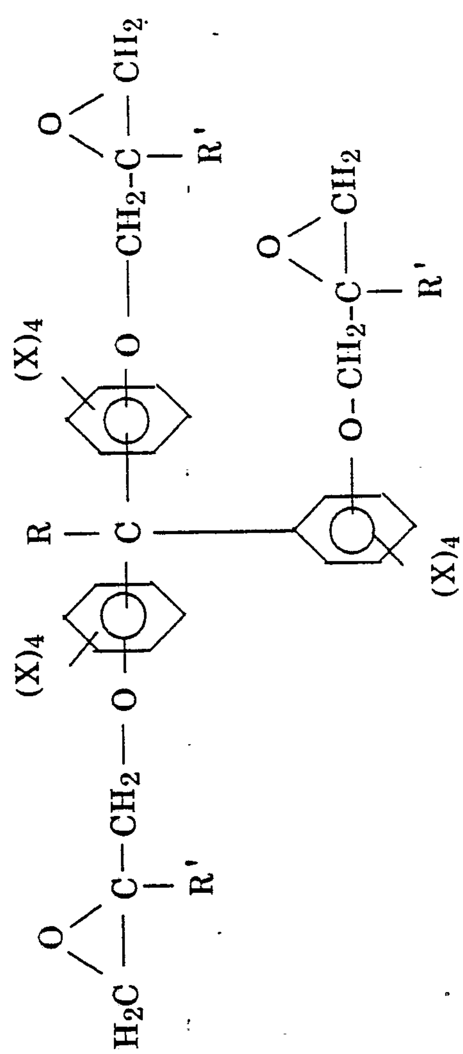

FORMULA IV

wherein each A is independently a hydrocarbyl group having from 1 to 9, preferably from 1 to 4, carbon atoms, -O-, -S-, -S-S-, -SO-, $-SO_2$, or -CO-; each A′ is independently a divalent hydrocarbyl group having from 1 to 10, preferably from 1 to 4 carbon atoms; each R is independently hydrogen or a hydrocarbyl group having from 1 to 10, preferably from 1 to 4, carbon atoms; each R′ is independently hydrogen or an alkyl group having from 1 to 4 carbon atoms; each X is independently hydrogen, a halogen atom, preferably chlorine or bromine, or a hydrocarbyl group having from 1 to 9, preferably from 1 to 4, carbon atoms; m has an average value from 0.1 to 4, preferably from 0.1 to 2, more preferably from 0.1 to 0.5; n has a value of zero or 1 and n′ has an average value of from zero to 5, preferably from zero to 2.5, more preferably from zero to 0.5 and

(2) from 10 to 50 preferably from 20 to 40, most preferably from 25 to 35 percent by weight based upon the combined weight of components (1) and (2) of at least one relatively high molecular weight halogenated epoxy or halogenated phenoxy resin represented by the formula

FORMULA V

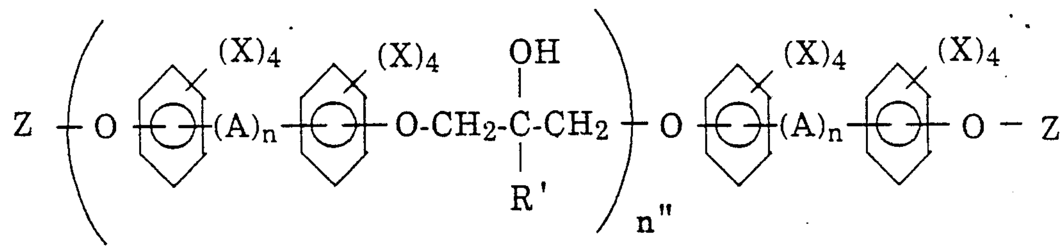

wherein A, R', X and n are as defined above; Z is a terminal group selected from hydrogen, a hydrocarbon group having from 3 to 9, preferably from 3 to 4 carbon atoms or the group

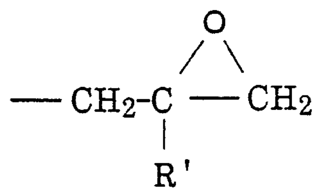

or

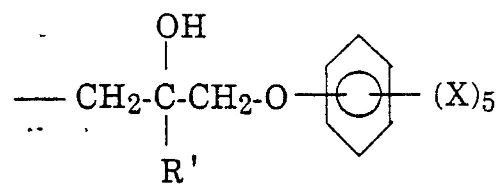

and n" has an average value of at least 8, preferably from 20 to 100, most preferably from 30 to 70 with the proviso that when component (1) is represented by Formula IV, component (2) does not have to be halogenated.

These homogenenous mixtures when cured with a suitable epoxy resin curing agent result in a heterogeneous product having at least two separate and distinct glass transition temperatures.

Particularly suitable relatively low molecular weight epoxy resins include diglycidyl ethers of bisphenol A, diglycidyl ethers of halogenated bisphenol A, triglycidyl ethers of tris hydroxyphenyl methane and mixtures thereof.

The present invention also pertains to a product resulting from curing a mixture comprising (a) the aforementioned homogeneous mixture containing (1) at least one relatively low molecular weight epoxy resin and (2) at least one relatively high molecular weight halogenated epoxy or halogenated phenoxy resin and (B) a curing quantity of at least one suitable curing agent for said epoxy resin which cured product is heterogeneous and has at least two separate and distinct glass transition temperatures.

Particularly suitable relatively high molecular weight epoxy or phenoxy resins which can be employed herein include those prepared by reacting a diglycidyl ether of a bisphenol or a diglycidyl ether of a halogenated or alkylated bisphenol with a bisphenol or a halogenated or alkylated bisphenol.

The relatively low and relatively high molecular weight epoxy resins can be prepared by any of the methods disclosed by Lee and Neville in their "Handbook of Epoxy Resins", McGraw-Hill (1967).

The phenoxy resins can be prepared by the method disclosed in Encyclopedia of Polymer Science and Technology, Interscience Publishers, pp 111-114 (1969).

Those relatively high molecular weight materials which are terminated in groups other than epoxy and hydroxyl can be prepared by reacting either an epoxy resin or a phenoxy resin with any suitable capping agent such as, for example alkylene oxides, phenol or halogen or alkyl substituted phenols, phenyl glycidyl ether, t-butyl glycidyl ether and the like.

Suitable curing agents which can be employed herein include, for example, aliphatic amines, aromatic amines, polyamides and sulfonic acid amides. Particularly suitable curing agents include, for example, sulfanilamide, methylene dianiline, phenylenediamine, diaminodiphenylsulfone, aminobenzylamine, ethylenediamine, diethylenetriamine, triethylenetetramine, aminoethylpiperazine, aminated polypropylene glycol, aminated polyethylene glycol, polyamide resins such as Versamid® 140 (commercially available from General Mills, Inc.), and combinations thereof.

Also, polyfunctional phenolic compounds can be employed as curing agents such as, for example, phloroglucinol, pyrogallol, diphenolic acid, tetrabromodiphenolic acid, tetramethyltrihydroxylbiphenyl, polyphenolics resulting from condensing an aldehyde with a phenolic compound or substituted phenolic compound or reaction products of dicyclopentadiene and oligomers thereof and a phenolic compound. Particularly suitable polyfunctional phenolic compounds include the novolac resins prepared from the condensation of phenol, or cresol with formaldehyde, hydroxybenzaldehyde, or hydroxy-benzophenone, and the halogenated derivatives thereof.

The compositions of the present invention can also, if desired, contain solvents, dyes, pigments, fillers, reinforcing agents, flow control agents, other suitable additives, and combinations thereof.

Suitable solvents which can be employed herein include, for example, hydrocarbons, ketones, glycol ethers, cyclic ethers, amides, halogenated hydrocarbons, and combinations thereof. Particularly suitable solvents include, xylene, toluene, acetone, methyl ethyl ketone, ethylene glycol ethyl ether, ethylene glycol methyl ether, diethylene glycol methyl ether, dipropylene glycol methyl ether, propylene glycol methyl ether, butanol, dimethyl-formamide, dichloromethane, and combinations thereof.

It is a relatively simple matter to determine if a blend of a relatively low molecular weight epoxy resin and a relatively high molecular weight epoxy or phenoxy resin will have two separate and distinct glass transition temperatures. One need only mix a small portion of the two resins with the desired curing agent, cure it and then detemine if the cured product has at least two separate and distinct glass temperatures by any suitable analytical method such as, for example, differential scanning calorimetry (DSC), thermomechanical analysis (TMA), dynamic mechanical analysis (DMA) or dynamic mechanical spectroscopy (DMS).

The compositions of the present invention are suitable for use in the preparations of castings, coatings, laminates, composites, encapsulants, and the like.

The following examples are illustrative of the present invention.

The following relatively low molecular weight epoxy resins (RLMWER) were employed herein.

RLMWER RESIN A was a diglycidyl ether of tetrabromobisphenol A having an epoxide equivalent weight (EEW) of 336, a number of average molecular weight of 670 and containing 46 percent bromine by weight. This resin is represented by formula II wherein n′ has an average value of 0.03.

RLMWER RESIN B was a diglycidyl ether of bisphenol A having an EEW of 184.5 and a number average molecular weight of 360. This resin is represented by formula II wherein n′ has an average value of 0.1.

RLMWER RESIN C was a triglycidyl ether of trishydroxyphenyl methane having an EEW of 186.6 and a number average molecular weight of 550.

RLMWER RESIN D was a diglycidyl ether of bisphenol K having an EEW of 177.8 and a number average molecular weight of 345. This resin is represented by formula II wherein n′ has an average value of 0.11.

The following relatively high molecular weight epoxy or phenoxy resins (RHMWEOPR) were employed herein.

## PREPARATION OF BROMINATED RHMWEOPR A

To 150 grams (0.446 equiv.) of RLMWER resin A, was added 118.9 grams (0.437 equiv.) of tetrabromobisphenol A. The mixture was stirred at 160°C until the mixture was homogeneous. To this homogeneous mixture was added 0.85 ml of a 70% methanol solution of tetrabutylphosphonium acetate.acetic acid complex. The resultant mixture was stirred until homogeneous, degassed in a vacuum oven and poured into a 12" x 12" x 0.25" (304.8 mm x 304.8 mm x 6.35 mm) aluminum mold coated with a fluorinated hydrocarbon mold release agent and heated at 177°C for 4 hours. The resultant relatively high molecular weight epoxy or phenoxy resin had a glass transition temperature (Tg) of 152°C, a weight average molecular weight of 50,695, a number average molecular weight of 23,899 and a $G_{IC}$ toughness of 2.15 kJ/$m^2$. This resin is represented by formula V wherein n″ has an average value of 38.7.

PREPARATION OF BROMINATED RHMWEOPR B

To 28.95 grams (0.086 equiv.) of RLMWER Resin A was added 21.05 grams (0.077 equiv.) of tetrabromobisphenol A. The mixture was stirred at 160°C until the mixture was homogeneous. To this homogeneous mixture was added 0.05 grams of a 70% methanol solution of ethyltriphenylphosphonium acetate•acetic acid complex. The resultant mixture was stirred until homogeneous, degassed in a vacuum oven and poured into a 12" x 12" x 0.25" (304.8 mm x 304.8 mm x 6.35 mm) aluminum mold coated with a fluorinated hydrocarbon mold release agent and heated at 177°C for 4 hours. The resultant relatively high molecular weight epoxy or phenoxy resin had a glass transition temperature (Tg) of 140°C, a wieght average molecular weight of 12,957 and a number average molecular weight of 5,791. This resin is represented by formula V wherein n″ has an average value of 8.6.

RHMWEOPR C was a relatively high molecular weight epoxy or phenoxy resin prepared from a diglycidyl ether of bisphenol A and bisphenol A having a weight average molecular weight of 35,000 and a number average molecular weight of 9,000 as a 40 percent by weight solution in methyl ethyl ketone, commercially available from The Dow Chemical Company as D.E.R.TM 684EK40. This resin is represented by formula V wherein n″ has an average value of 30.5.

Property data were obtained by the following procedures:

GLASS TRANSITION TEMPERATURE

The glass transition temperatures (Tg) were determined by Differential Scanning Calorimetry using a calibrated DuPont Instrument (Model No. 912 with a 1090 controller). Samples were run under a nitrogen atmosphere with a heat-up rate of 10°C per minute.

FRACTURE TOUGHNESS ($G_{IC}$)

The method for measuring $G_{IC}$, (fracture toughness or "critical strain energy release rate") values is an adaptation of ASTM E-399 for plastics materials from the original usage with metals. The compact tension test is now widespread in usage and is described in the J. Mater. Sci., Vol. 16, (1981) p 2657. An individual test piece is cut as an approximate 1" (25.4 mm) square from a flat casting usually of 1/8" (3.2 mm) thickness. A dovetail notch is cut into one edge, centered, about 1/4" (6.3 mm) in depth. Next, a razor blade is inserted into this notch and tapped to produce a precrack. Two holes are then drilled adjacent to the dovetail as indicated in ASTM 3-399, allowing the test piece to be pinned into position in the Instron test machine. Extensions of the sample now allows the force required to to propagate opening of the precrack to be measured, using a test speed of 0.02 inches/minute (0.0085 mm/sec.). This force is used in the equation given in ASTM E-399, along with the required sample dimensions and actual precrack length, to calculate a "stress intensification factor" KQ. This is then combined with the tensile modulus (in those instances where the tensile modulus was not measured, a value of 300,000 psi (2,068.43 Mpa) was used) and Poisson's ratio for the material to give the value for $G_{IC}$, usually reported in ergs/$cm^2$x$10^6$. A scale comparing typical values for $G_{IC}$ for various plastics and metals is given in reference Lee, L. H., "Physicochemical Aspects of Polymer Surfaces", K. L. Mittal, ed. Plenum Press, New York, N. Y., 1983.

MOLECULAR WEIGHT

The molecular weight values were determined using a size exclusion gel permeation chromatograph available from Waters and Associates of Milford, Mass. The instrument incorporates the following:

pump - model M-6000A
autosampler - Model 710B (WISP)
detector - Model R-401 (refractive index)
heater - Model TCM

The column consisted of a set of four Waters Associates microSTYRAGEL columns. Each individual column having one of the following porosities:

$10^4$ angstrom

$10^3$ angstrom

500 angstom

100 angstrom

The typical chromatographic conditions were as follows:

flow - 2.0 ml/min

temperature - 40°C

injection vol. - 0.1 ml

mobile phase - tetrahydrofuran

The sample was prepared by weighing 0.08 grams of the resin into a vial and adding 4 ml of tetrahydrofuran. The contents were shaken till dissolved. If any cloudiness was observed, the sample was filtered through a 0.5 micron membrane filter before injecting into the chromatograph. For molecular weight determinations, the chromatographs were standardized against epoxy resins and standard polystyrene samples of known molecular weight.

## EXAMPLE 1

30 grams of Brominated RHMWEOPR A was dissolved in 70 grams of tetrahydrofuran (THF) and the resultant mixture was added to 70 grams of RLMWER B. After mixing until homogeneous, the THF was removed by vacuum distillation and a stoichiometric amount of methylene dianiline was added and the mixture was cured for 16 hours at 55°C, followed by 2 hours at 125°C and finally for 2 hours at 175°C. The resultant cured casting had two distinct glass transition temperatures, one at 144.5°C and another at 173.1°C. The $G_{IC}$ was 0.45 $kJ/m^2$ and the notched Izod impact was 0.49 in-lbs./in. (0.022 J/cm) of notch.

## EXAMPLE 2

The procedure of example 1 was followed employing RLMWER C instead of RLMWER B and a relatively high molecular weight epoxy or phenoxy resin as indicated in Table I. The results are also given in Table I.

TABLE I

| | EXPERIMENT DESIGNATION | | | | |
|---|---|---|---|---|---|
| | A | B | C | D* | E* |
| RLMWER | | | | | |
| Type | C | C | C | C | C |
| Wt. %[a] | 80 | 70 | 70 | 100 | 100 |
| RHMWEOPR | | | | | |
| Type | A | A | B | --- | --- |
| Wt. % | 20 | 30 | 30 | 0 | 0 |
| CURING AGENT | | | | | |
| Type | MDA[c] | SA[d] | MDA[c] | MDA[c] | SA[d] |
| gphm[b] | 24.6 | 15.4 | 21.5 | 30.7 | 22.0 |
| 1stTg, °C | 152 | 117 | 150 | >250 | >250 |
| 2nd Tg, °C | >250 | >250 | >250 | none | none |
| $G_{IC}$, $kJ/m^2$ | 0.13 | 0.13 | 0.21 | 0.10 | 0.12 |

* Not an example of the present invention.

[a]The wt. % is based upon the combined weight of the epoxy resin and the relatively high molecular weight epoxy or phenoxy resin.

[b]Grams per hundred grams of mixture of relatively low molecular weight epoxy resin and relatively high molecular weight epoxy or phenoxy resin.

[c]Methylene dianiline.

[d]Sulfanilamide.

## EXAMPLE 3

The procedure of example 1 was followed employing RLMWER D instead of RLMWER B and a relatively high molecular weight epoxy or phenoxy resin as indicated in Table II. The results are also given in Table II.

TABLE II

| | | EXPERIMENT DESIGNATION | | | |
|---|---|---|---|---|---|
| | | A | B | C* | D* |
| RLMWER | | | | | |
| | Type | D | D | D | D |
| | Wt. %[a] | 70 | 70 | 100 | 100 |
| RHMWEOPR | | | | | |
| | Type | A | A | --- | --- |
| | Wt. % | 30 | 30 | 0 | 0 |
| CURING AGENT | | | | | |
| | Type | MDA[c] | SA[d] | MDA[c] | SA[d] |
| | gphm[b] | 19.7 | 14.1 | 27.6 | 21.5 |
| 1st Tg, °C | | 153 | 131 | 195 | 207.5 |
| 2nd Tg, °C | | 193 | 198 | none | none |
| $G_{IC}$, kJ/m$^2$ | | 0.96 | 0.77 | 0.38 | 0.52 |

*Not an example of the present invention.

[a]The wt. % is based upon the combined weight of the relatively low molecular weight epoxy resin and the relatively high molecular weight epoxy or phenoxy resin.

[b]Grams per hundred grams of mixture of relatively low molecular weight epoxy resin and relatively high molecular weight epoxy or phenoxy resin.

[c]Methylene dianiline.

[d]Sulfanilamide.

EXAMPLE 4

RHMWEOPR C, 17.28 grams, was added to 16.13 grams of RLMWER C. After mixing until homogeneous, the methyl ethyl ketone was removed by vacuum distillation and 85 percent of the stoichiometric amount of sulfanilamide was dissolved into the mixture at 180°C, cured for 16 hours at 180°C followed by 2 hours at 230°C. The resultant cured casting had two distinct glass transition temperatures, one at 96°C and another at 250°C and the $G_{IC}$ was 0.44.

COMPARATIVE EXPERIMENT A

Various amounts of RLMWER B was blended with various amounts of RHMWEOPR C. The methyl ethyl ketone was removed by vacuum distillation and the resulting solution was blended with a stoichiometric quantity of methylenedianiline and cured for 16 hours at 55°C. 2 hours at 125°C and finally for 2 hours at 175°C. The resulting cured product was then analyzed to determine the glass transition temperatures. The compositions (after removal of methylethyl ketone) and results are given in the following Table III.

TABLE III

EXPERIMENT DESIGNATION

| | A* | B* | C* | D* | E* |
|---|---|---|---|---|---|
| RLMWER | | | | | |
| Type | B | B | B | B | B |
| grams | 1374 | 1310 | 135 | 596 | 181.8 |
| Wt. %[a] | 96.0 | 90.0 | 80.0 | 70.0 | 100 |
| RHMWEOPR | | | | | |
| Type | C | C | C | C | C |
| grams | 57.2 | 145.6 | 33.8 | 255.4 | 0 |
| Wt. %[a] | 4.0 | 10.0 | 20.0 | 30.0 | 0 |
| CURING AGENT | | | | | |
| Type | MDA[c] | MDA[c] | MDA[c] | MDA[c] | MDA[c] |
| gphm[b] | 26.8 | 25.2 | 22.3 | 19.5 | 27.8 |
| 1st Tg, °C | 174.5 | 174.5 | 163.7 | 146.6 | 174.7 |
| 2nd Tg, °C | none | none | none | none | none |

*Not an example of the present invention.

[a]The wt. % is based upon the combined weight of the relatively low molecular weight epoxy resin and the relatively high molecular weight epoxy or phenoxy resin.

[b]Grams per hundred grams of mixture of relatively low molecular weight epoxy resin and relatively high molecular weight epoxy or phenoxy resin.

[c]Methylene dianiline.

## Claims

1. A homogeneous mixture comprising

(1) from 50 to 90, preferably from 60 to 80, most preferably from 65 to 75 percent by weight based upon the combined weight of components (1) and (2) of at least one relatively low molecular weight epoxy resin represented by the following formulas

FORMULA I

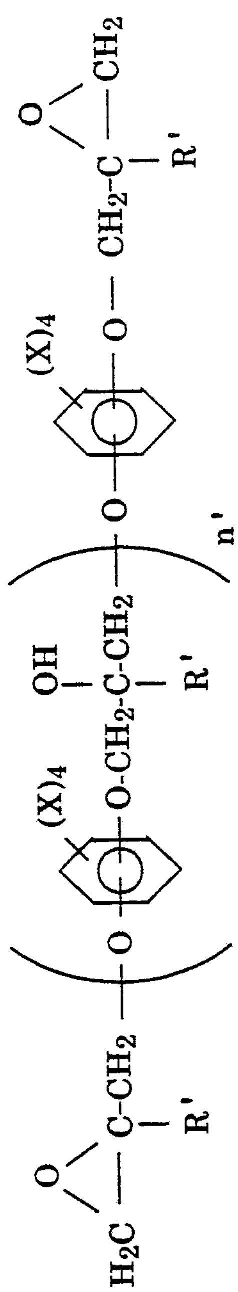

FORMULA II

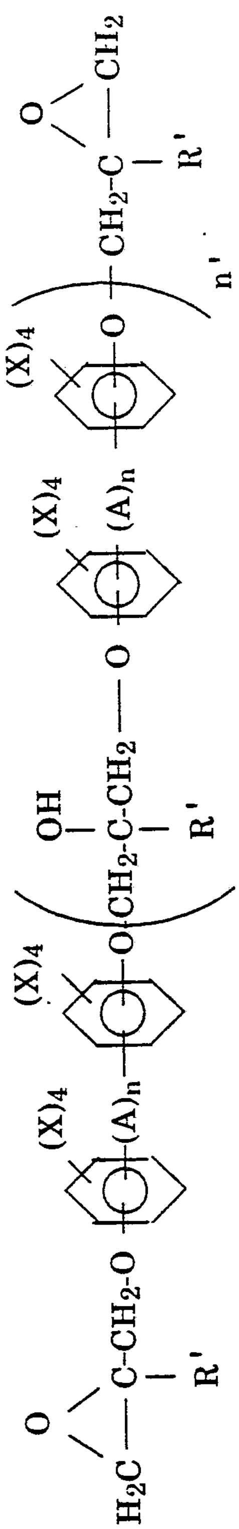

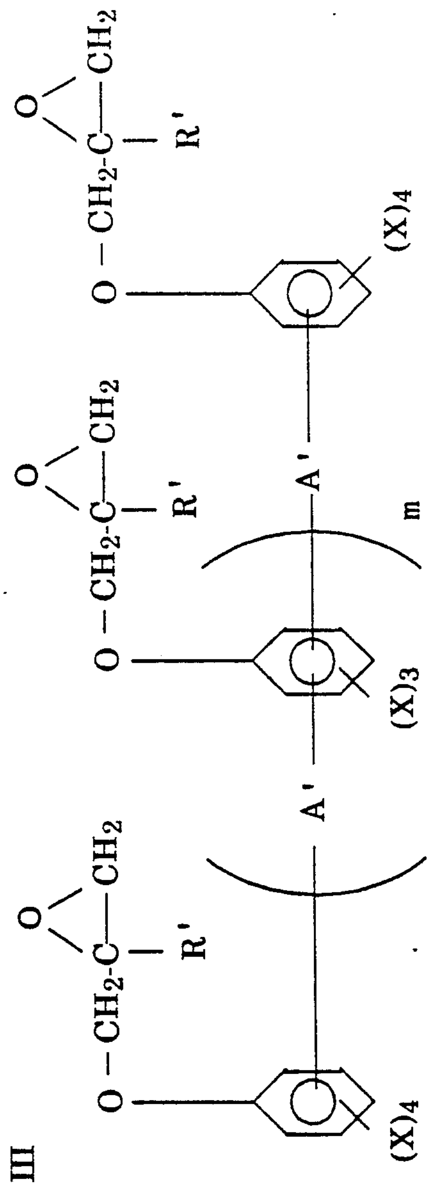

FORMULA III

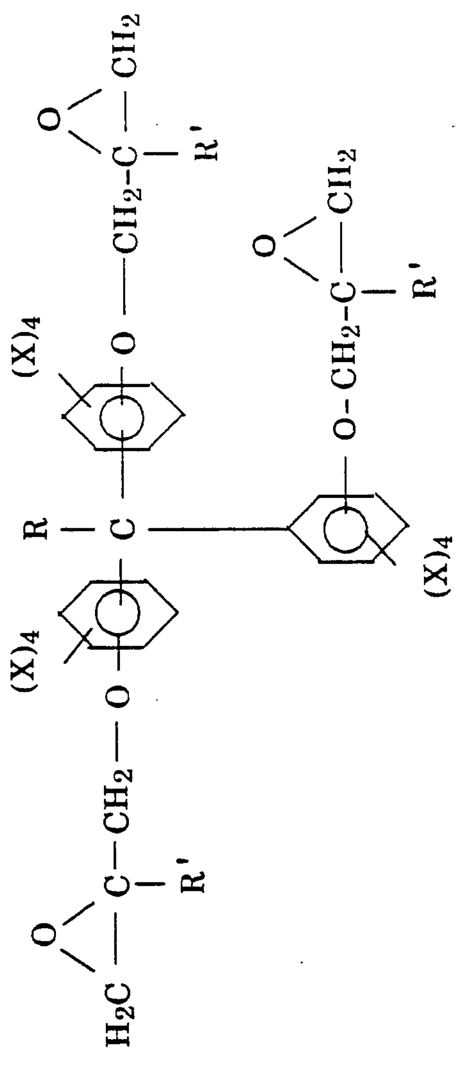

FORMULA IV

wherein each A is independently a hydrocarbyl group having from 1 to 9 carbon atoms, -O-, -S-, -S-S-, -SO-, $-SO_2-$, or -CO-,; each A′ is independently a divalent hydrocarbyl group R is hydrogen or a hydrocarbyl group having from 1 to 10 carbon atoms; having from 1 to 10 carbon atoms; each R′ is independently hydrogen or an alkyl group having from 1 to 4 carbon atoms; each X is independently hydrogen, a halogen atom or a hydrocarbyl group having from 1 to 9 carbon atoms; m has an average value from 0.1 to 4; n has a value of zero or 1 and n′ has an average value of from zero to 5; and

(2) from 10 to 50 percent by weight based upon the combined weight of components (1) and (2) of at least one relatively high molecular weight halogenated epoxy or halogenated phenoxy resin represented by the following formula

FORMULA V

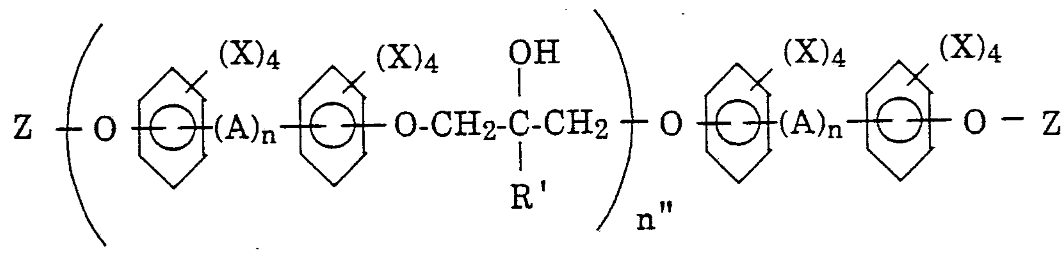

wherein each A is independently a hydrocarbyl group having from 1 to 9 carbon atoms, -O--S-, -S-S-, -SO-, $-SO_2$-or -CO-; each R′ is independently hydrogen or an alkyl group having from 1 to 4 carbon atoms; each X is independently hydrogen, a halogen atom, or a hydrocarbyl group having from 1 to 9 carbon atoms, at least one of which x per ring is a halogen atom; each Z is independently a terminal group selected from hydrogen, a hydrocarbon group having from 3 to 9 carbon atoms or the group represented by the formulas

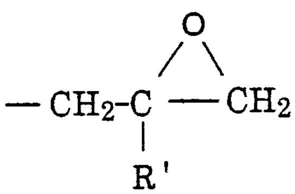

or

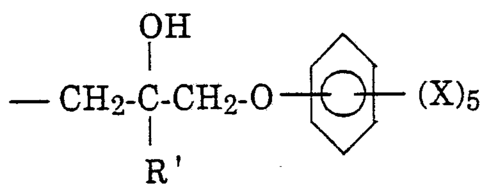

;

wherein R′ and X are defined as before; n has a value of zero or 1 and n″ has a value of at least about 8; with the proviso that when component (1) is represented by Formula IV, component (2) does not have to be halogenated.

2. The homogeneous mixture of Claim 1 wherein component (1) is a relatively low molecular weight epoxy resin represented by formulas II, III or IV wherein R and X are hydrocarbyl groups having from 1 to 4 carbon atoms, R′ is hydrogen or an alkyl group having from 1 to 4 carbon atoms; m has an average value from 0.1 to 2; n has a value of 1 and n′ has an average value from zero to 2.5 and wherein component (2) is a relatively high molecular weight halogenated epoxy or halogenated phenoxy resin represented by formula V wherein some of X is a hydrocarbyl group having from 1 to 4 carbon atoms; R′ is hydrogen or an alkyl group having from 1 to 4 carbon atoms; n has a value of zero or 1 and n″ has an average value of from 20 to 100.

3. The homogeneous mixture of Claim 1 wherein component (1) is an epoxy resin represented by formulas II, III, or IV wherein R and X are hydrocarbyl groups having from 1 to 4 carbon atoms, R′ is hydrogen or an alkyl group having from 1 to 4 carbon atoms; m has an average value from 0. to 0.5; n has a value of 1 and n′ has an average value from zero to 0.5 and wherein component (2) is a relatively high molecular weight halogenated epoxy or halogenated phenoxy resin represented by formula V wherein some of X is a hydrocarbyl group having from 1 to 4 carbon atoms; R′ is hydrogen or an alkyl group having from 1 to 4 carbon atoms; n has a value of 1 and n″ has an average value of from 30 to 70.

4. The homogeneous mixture of Claim 1 wherein component (2) is a brominated relatively high molecular weight epoxy or phenoxy resin.

5. The homogeneous mixture of Claim 1 wherein component (1) is selected from (a) a diglycidyl ether of bisphenol A, (b) a triglycidyl ether of trihydroxyphenyl methane or (c) a mixture thereof.

6. The homogeneous mixture of Claim 1 wherein component (1) is represented by the following formula

FORMULA IV

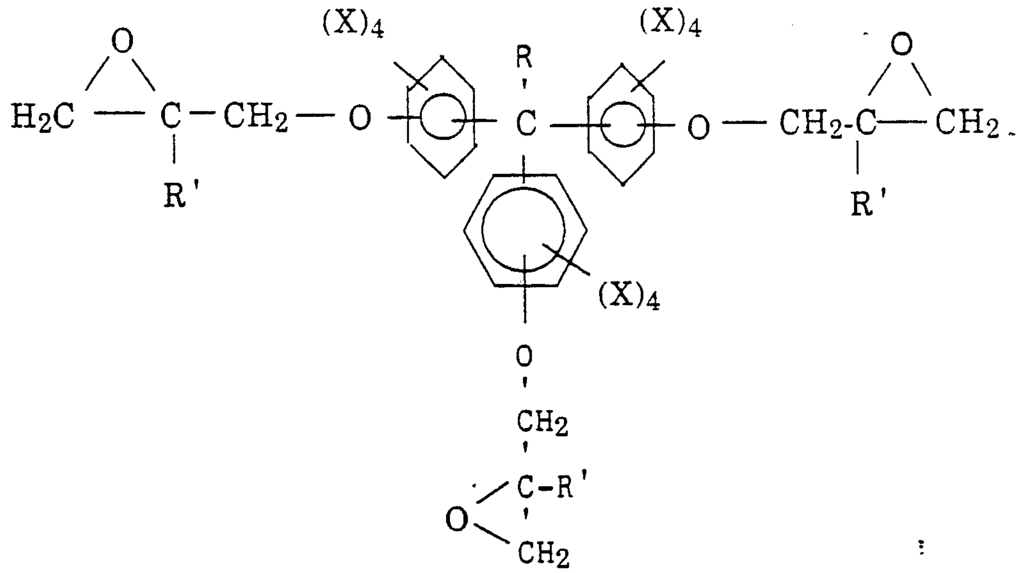

wherein R and R′ are as defined in Claim 1 and each X is independently hydrogen or a hydrocarbyl group having from 1 to 9 carbon atoms; and

component 2 is relatively high molecular weight non-halogenated epoxy or non-halogenated phenoxy resin represented by the following formula

FORMULA V

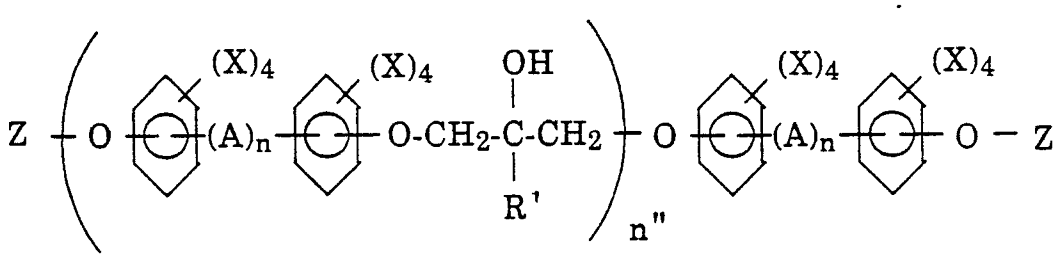

wherein A, R′, Z, n and n″ are defined as in Claim 1 and each X is independently hydrogen or a hydrocarbyl group having from 1 to 9 carbon atoms.

7. The homogeneous mixture of Claim 6 wherein in component (2) n has a value of 1 and n″ has an average value of from 30 to 70.

8. A product resulting from curing a mixture comprising (A) a homogeneous mixture of any one of Claims 1 to 7 and (B) a curing quantity of a suitable curing agent such that said cured product is heterogeneous and has at least two separate and distinct glass transition temperatures.

9. The product of Claim 8 wherein component B is an aromatic amine or a sulfonic acid amine.

10. The product of Claim 8 wherein component B is methylene dianiline or sulfonilamide.